# EUROPEAN PATENT SPECIFICATION

(11) **EP 1 835 260 B1**
(45) Date of publication and mention of the grant of the patent: **01.02.2017**
(21) Application number: 06111021.9
(22) Date of filing: 13.03.2006
(51) Int. Cl.: G01C 23/00, G08G 5/04, G08G 5/00, G05D 1/06

(54) **Terrain augmented display symbology**
Geländeerweiterte Anzeigesymbologie
Symbologie d'affichage augmentée en termes de terrain

(43) Date of publication of application: 19.09.2007
(73) Proprietor: HONEYWELL INC., Morristown NJ 07960 (US)
(72) Inventor: Gang, He, Morristown, NJ 07960 (US)
(74) Representative: Houghton, Mark Phillip

(56) References cited:
- US-A- 4 368 517
- US-A- 5 343 395
- US-A- 5 745 863
- US-A1- 2002 123 830
- US-A1- 2004 225 420
- US-A1- 2005 206 533

## Description

The present invention relates generally to display symbology, and more particularly, relates to terrain augmented display symbology.

A pilot uses flight instruments and associated displays to navigate an aircraft. The easier it is for the pilot to obtain and understand the information provided by these instruments and displays, the more likely that the pilot will be able to successfully navigate the aircraft. This is especially true during approach and landing on a runway.

Currently, instrument landing systems (ILS), microwave landing systems (MLS), or satellite landing systems (SLS) are used to guide aircraft during landing. These systems typically use a deviation bar on a horizontal indicator to indicate lateral deviation from the approach course and a glide scope indicator to indicate vertical deviation from the glide scope. The deviation bar and the glide scope indicator provide flight path deviation information to the pilot, allowing the pilot to make flight path corrections while landing.

Because looking at the horizontal indicator causes the pilot to look away from the cockpit window, some aircraft have incorporated a head-up display. The head-up display projects symbology representing the deviation bar and glide scope indicator onto a screen integrated into the cockpit window, so that the pilot can simultaneously view both the symbology and conditions outside the cockpit. This solution improves safety because the pilot can continue to monitor the situational progress of the flight while obtaining flight data. In addition, pilot fatigue is reduced by reducing the number of instruments needing to be scanned.

Initially, the symbology used on the head-up display to represent the information previously provided by the horizontal indicator was not intuitive. The pilot had to be trained to understand what data the symbology represented and how to interpret the data. By making the symbology more intuitive, aircraft navigation is simplified, pilot error and fatigue is reduced, and safety is increased.

An improvement to symbology format is addressed in U.S. Patent No. 5,745,863 titled "Three Dimensional Lateral Displacement Display Symbology Which Is Conformal To The Earth,". U.S. Patent No. 5,745,863 describes using two-dimensional lines to depict an extended course centerline, which extends towards a vanishing point near a horizon line on the display, and two-dimensional deviation marks on either side of an aircraft symbol.

While U.S. Patent No. 5,745,863 describes some improvements regarding display symbology, additional improvements can be made. These additional improvements may further simplify aircraft navigation, reduce pilot error and fatigue, and increase safety. Other examples of prior art devices can be found disclosed in US2004/225420, US2005/206533 and US2002/123830.

In order to solve the problems associated with the prior art, the present invention provides a method for providing terrain augmented conformal lateral deviation display symbology for an aircraft, as claimed in claim 1, which comprises:
calculating a distance to runway,
determining if the calculated distance is less than a predetermined threshold distance;
determining an approach course to the runway,
generating a terrain-tracing extended runway centerline symbol along the approach course; and
displaying the extended runway centerline symbol on a screen if the calculated distance is less than the predetermined threshold disance, wherein the extended runway centerline symbol provides a visual cue of terrain elevations along the approach course to the runway.

Generating the terrain-tracing extended runway centerline symbol may include computing lateral line coordinates along the approach course and retrieving terrain elevation data corresponding to the coordinates.

The method may further include generating an aircraft symbol.

The method may further include displaying the aircraft symbol on the screen providing aircraft position information.

The aircraft symbol may further provide a direction of travel.

The method may further include generating at least two lateral deviation marks.

The generating the lateral deviation marks may include computing terrain-tracing projection lines at a number of fixed angles matching an emission beam pattern from a runway beacon.

The method may further include displaying the lateral deviation marks on the screen so that the lateral deviation marks are centered about the extended runway centerline symbol.

The method may further include displaying the lateral deviation marks on the screen so that the lateral deviation marks are centered about the aircraft symbol.

The extended runway centerline symbol may be displayed on the screen if a runway is selected and an aircraft's distance to the runway is less than a threshold value.

### BRIEF DESCRIPTION OF THE DRAWINGS

Presently preferred embodiments are described below in conjunction with the appended drawing figures, wherein like reference numerals refer to like elements in the various figures, and wherein:
Fig. 1 is a block diagram of a flight system, according to an example;
Fig. 2 illustrates a flight display, according to an example;
Fig. 3 illustrates a flight display, according to another example;
Fig. 4 illustrates a flight display, according to another example;
Fig. 5 illustrates a flight display, according to another example; and
Fig. 6 is a flow diagram depicting a method for providing terrain augmented display symbology, according to an example.

### DETAILED DESCRIPTION

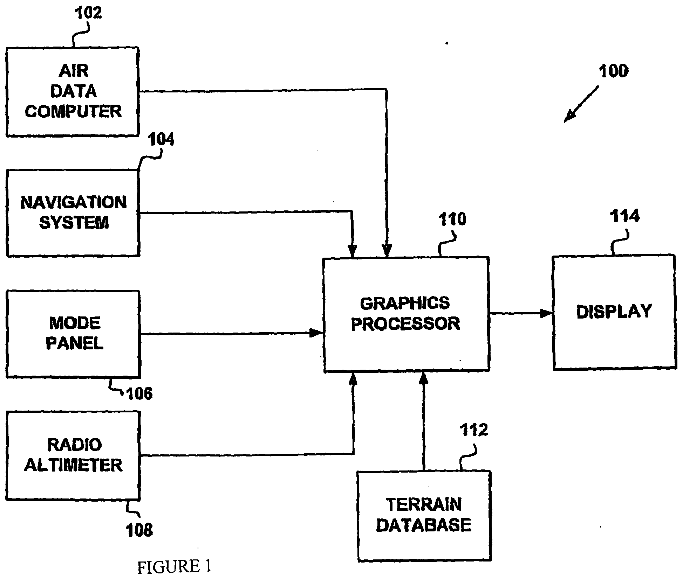

Fig. 1 is a block diagram of a flight system 100. The flight system 100 includes a variety of avionic systems, including an air data computer 102, a navigation system 104, a mode panel 106, and a radio altimeter 108. These, as well as other avionic systems, may provide data to a graphics processor 110. For example, the air data computer 102 may provide barometric altitude, the navigation system 104 may provide glide slope deviation, the mode panel 106 may provide glide path angle and other runway information, and the radio altimeter 108 may provide radio altitude to the graphics processor 110. Additionally, the graphics processor 110 may receive data from a variety of other sources, including a terrain database 112. The terrain database 112 includes elevation data that corresponds to geographic coordinates.

The graphics processor 110 may generate the symbology described herein using techniques substantially the same as prior art symbols, such as a runway symbol. Based on the data received, the graphics processor 110 controls what is displayed on a display 114. In a preferred embodiment, the display 114 is a heads-down or a head-up display. However, other displays now known or developed in the future may be used. For example, the display 114 may be a helmet mounted display.

In an aircraft using a head-up display, the screen of the display 114 is incorporated into the cockpit window of an aircraft. Thus, the pilot is able to view the symbology on the screen while monitoring conditions outside the aircraft. In a heads-down display, synthetic terrain images are used on a background in which flight symbology are displayed as schematic overlays.

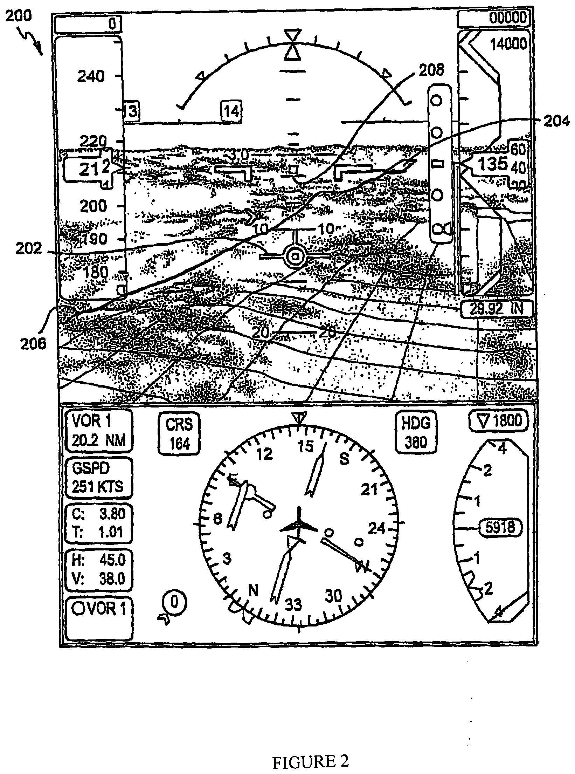

Fig. 2 illustrates a flight display 200. The flight display 200 includes example terrain augmented display symbology generated by the graphics processor 110. The flight display 200 depicts a centerline 202 ending at a runway 204. The centerline 202 is a symbolic guide used by the pilot to adjust the aircraft's flight path during the approach to the runway 204.

Also shown in Fig. 2 is a flight path marker 206, which is a primary guidance cue for aircraft controls and for turning and aligning with the runway 204. The flight path marker 206 depicts the current position of the aircraft in relationship to the centerline 202. Fig. 2 also depicts an aircraft symbol 208 which may be used by the pilot to monitor aircraft roll conditions. Additional flight information may also be depicted on the flight display 200.

The centerline 202 is a terrain-tracing, three-dimensional extended runway centerline. In some instances, the presence of terrain and other sensitive areas requires an approach course line that differs from the runway centerline. The centerline 202 traces the terrain surface, which provides the pilot with more guidance than a two-dimensional (i.e., straight line) centerline. As a result, the pilot can more easily plan course adjustments during approach to the runway 204 based on the terrain elevation. For example, the pilot may adjust the course of the aircraft so as to avoid a mountain peak upon approach to the runway 204.

The centerline 202 may be calculated using runway position data and terrain data located in the terrain database 112. More specifically, the centerline 202 may be generated by computing lateral line coordinates extended from a runway end point along the runway 204 direction or along the direction of a selected approach course. The runway position data may be obtained from an on-board navigation database and/or from a data link. The computed lateral line coordinates may then be used to obtain corresponding elevation data, which may be obtained from the terrain database 112.

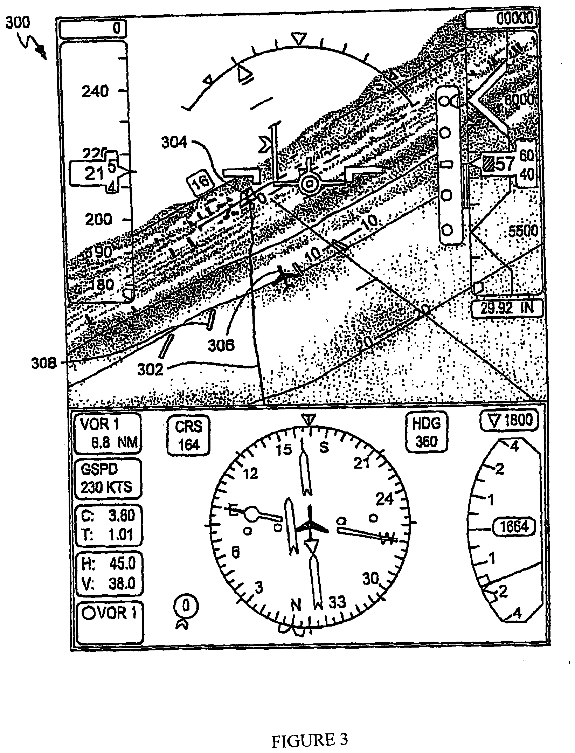

Fig. 3 illustrates a flight display 300. The flight display 300 includes additional terrain augmented display symbology generated by the graphics processor 110. The flight display 300 depicts a centerline 302 ending at a runway 304. The centerline 302 is similar to the centerline 202 depicted in Fig. 2, but located on different terrain.

Also shown in Fig. 3 is an aircraft symbol 306 shaped like an airplane. Additionally, terrain-tracing, three-dimensional, lateral deviation marks 308 are depicted on the flight display 300. While four lateral deviation marks 308 are depicted in Fig. 3, more or less than four lateral deviation marks may be used. Both the aircraft symbol 306 and the lateral deviation marks 308 point towards an ILS source location (i.e., an ILS beacon located at an endpoint of a runway) providing the pilot with direction information via guidance symbology that can be understood intuitively. Additional flight information may also be depicted on the flight display 300.

The lateral deviation marks 308 are lateral deviation indicators used to provide additional visual cues for determining terrain and deviation line closure rate. The lateral deviation marks 308 are used to represent both present deviations from the centerline 302 and direction of aircraft movement. Thus, the lateral deviation marks 308 provide a visual guide for closure rate to the centerline 302 allowing the pilot to more easily align the aircraft with the runway 304.

The graphics processor 110 generates the lateral deviation marks 308 based on current aircraft parameters obtained from the navigation system 104 and/or other avionic systems. The lateral deviation marks 308 may be generated by computing terrain-tracing projection lines at a number of fixed angles matching an emission beam pattern of the runway ILS beacon. Sections of the terrain-tracing lines in the forward looking perspective display view may be used to generate the lateral deviation marks 308.

The lateral deviation marks 308 are depicted in Fig. 3 as being centered about the centerline 302. The lateral deviation marks 308 may be located at a predetermined distance from the centerline 302. For example, the lateral deviation marks 308 located closest to the centerline 302 may be displayed one degree of deviation from the centerline 302, while the next closest lateral deviation marks 308 may be two degrees of deviation from the centerline 302 as measured from the runway beacon beam location. Other predetermined distances, such as a fixed distance (e.g., 1000 feet) may be used for rendering the lateral deviation marks 308 with respect to the centerline 302.

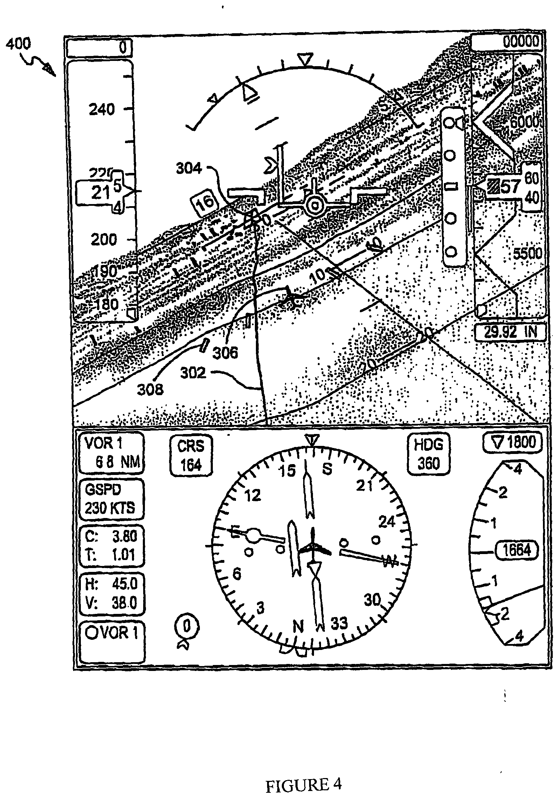

The lateral deviation marks 308 may also be centered about the aircraft symbol 306 as seen in flight display 400 depicted in Fig. 4. The pilot may be able to choose the formatting of the symbology to be centerline centered or aircraft centered based on personal preference and/or current flight conditions. Generally, one mode is selected by the pilot during a landing.

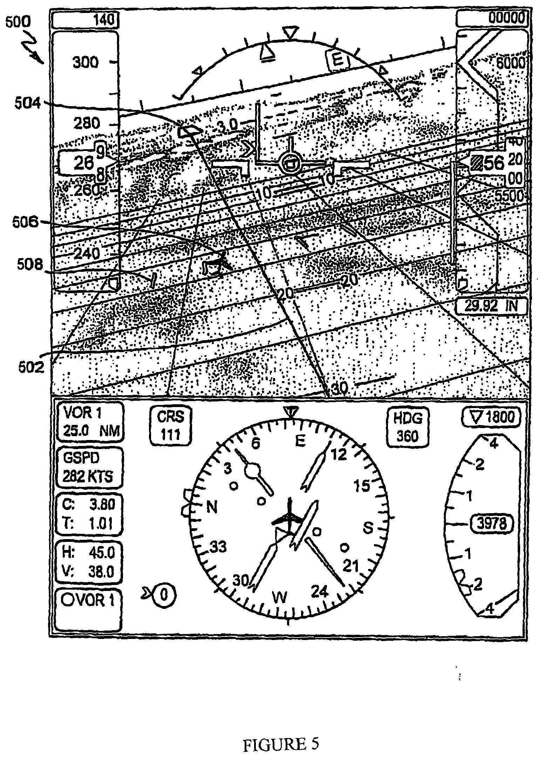

Fig. 5 illustrates a flight display 500. The flight display 500 is another example of terrain augmented display symbology generated by the graphics processor 110. The flight display 500 depicts a centerline 502 ending at a runway 504. In addition, the flight display 500 depicts an aircraft symbol 506 and lateral deviation marks 508.

The flight display 500 depicts an image that may be generated when an ILS signal is not available. In this scenario, deviation scales and the aircraft's position may be determined using data from a Flight Management System (FMS) and runway data. An aircraft symbol 506 provides a visual cue of the aircraft's current track and/or heading. Once the ILS becomes available, the graphics processor 110 may transition to providing deviation measurements using the ILS.

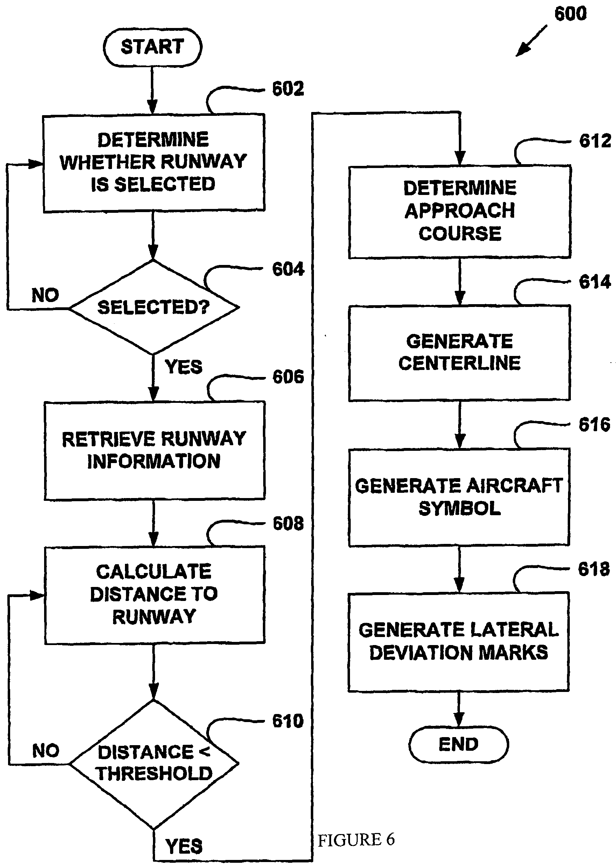

Fig. 6 is a flow diagram 600 depicting a method for providing terrain augmented display symbology. At block 602, a determination is made as to whether a runway is selected for approach and landing. The graphics processor 110 may check an FMS flight plan and/or receive input directly from the pilot to determine if a runway is selected. At block 604, if a runway has not been selected, the method returns to block 602 to determine whether a runway is now selected.

If a runway has been selected, at block 606, runway information regarding the selected runway is obtained. The graphics processor 110 may obtain runway information from an on-board FMS database and/or via a data link. The runway information includes the size and position of the selected runway. Additional information regarding the runway may also be available.

At block 608, the distance from the aircraft to the selected runway is calculated. The graphics processor 110 calculates the distance using the runway information obtained at block 606 and the current position of the aircraft. The current position of the aircraft may be obtained from the ILS or FMS. When the ILS signal is available, the current aircraft position may be calculated by using lateral (angle) deviation data obtained from the avionic systems 102-108. Without the ILS signal, the current aircraft position may be determined by the FMS and/or GPS.

At block 610, the distance to the runway is compared to a threshold value for determining whether to display approach symbology. The threshold value may be a predetermined value used to identify at what distance the pilot should start receiving approach information. The threshold value may be based on the selected runway and approach direction. For example, the pilot should not receive the approach symbology too soon as the symbology may distract the pilot from more immediate flight concerns. However, the pilot should receive the approach symbology soon enough to plan and implement a safe landing on the selected runway.

If the distance to the runway is greater than the threshold value, then the method returns to block 608 to determine whether the distance to the runway is now less than the threshold value. Otherwise, at block 612, an approach course to the runway is determined. The approach course and direction may be calculated based on ILS beam direction, runway direction, and/or final approach procedure direction.

At block 614, a terrain-tracing centerline is generated along the approach course determined at block 612. The graphics processor 110 generates a terrain-tracing centerline by first computing lateral coordinates along the centerline and then retrieving terrain elevation data from the terrain database 112 based on the coordinates. The terrain-tracing centerline may be displayed in a color that is visible on the rendered terrain background.

At block 616, an aircraft symbol is generated. The aircraft symbol may be rendered in two modes. In a first mode, the aircraft symbol may be oriented to indicate current track position. In a second mode, the aircraft symbol may be oriented to indicate both current track position and the direction of travel. In the second mode, the aircraft symbol may point towards the ILS beam location. In both the first and second mode, the aircraft symbol provides aircraft position information with respect to the centerline.

The aircraft symbol may be rendered in a color that can easily be seen by the pilot with respect to the rendered background terrain. The color of the aircraft symbol may also indicate ILS signal or FMS position based operation.

At block 618, lateral deviation marks are generated. The lateral deviation marks may be computed based on angle emission lines from the ILS beam location and terrain elevation data from the terrain database 112. A small segment of the emission lines may be used to generate the lateral deviation marks.

The lateral deviation marks may be rendered in a color that can easily be seen by the pilot with respect to the rendered background terrain. The color of the lateral deviation marks may also indicate ILS signal or FMS position based operation. Further, the lateral deviation marks may be rendered so that they are centered about the centerline symbol or centered about the aircraft symbol.

Terrain augmented conformal lateral deviation display symbology improves a pilot's spatial awareness during aircraft approach and landing. The pilot may be able to quickly interpret the symbology and take actions based on the elevation of the surrounding terrain. As a result, aircraft navigation may be simplified, pilot error and fatigue may be reduced, and safety may be increased.

It should be understood that the illustrated embodiments are examples only and should not be taken as limiting the scope of the present invention. For example, while ILS was used to describe the invention, the symbology may also be used with MLS and SLS systems. Therefore, all embodiments that come within the scope of the following claims are claimed as the invention.

## Claims

1. A method for providing terrain augmented conformal lateral deviation display symbology for an aircraft, comprising in combination:
calculating a distance to a runway (608);
determining if the calculated distance is less than a predetermined threshold distance (610);
determining an approach course to the runway (612);
generating a terrain-tracing extended runaway centerline symbol along the approach course (614); and
displaying the extended runaway centerline symbol on a screen if the calculated distance is less than the predetermined threshold distance, wherein the extended runway
centerline symbol provides a visual cue of terrain elevations along the approach course to the runway.

2. The method of claim 1, wherein generating the terrain-tracing extended runway centerline symbol includes computing lateral line coordinates along the approach course and retrieving terrain elevation data corresponding to the coordinates.

3. The method of claim 1, further including generating an aircraft symbol (616).

4. The method of claim 3, further including displaying the aircraft symbol on the screen providing aircraft position information.

5. The method of claim 4, wherein the aircraft symbol further provides a direction of travel.

6. The method of claim 3, further including generating at least two lateral deviation marks (618).

7. The method of claim 6, wherein generating the lateral deviation marks includes computing terrain-tracing projection lines at a number of fixed angles matching an emission beam pattern from a runway beacon.

8. The method of claim 6, further including displaying the lateral deviation marks on the screen so that the lateral deviation marks are centered about the extended runway centerline symbol.

9. The method of claim 6, further including displaying the lateral deviation marks on the screen so that the lateral deviation marks are centered about the aircraft symbol.

10. The method of claim 1, wherein the extended runway centerline symbol is displayed on the screen if a runway is selected and an aircraft's distance to the runway is less than a threshold value.

## Patentansprüche

1. Verfahren zum Bereitstellen einer Symbolik einer geländeerweiterten konformen Seitenabweichungsanzeige für ein Luftfahrzeug, umfassend in Kombination:
Berechnen einer Distanz zu einer Start-/Landebahn (608);
Bestimmen, ob die berechnete Distanz kürzer ist als eine im Voraus bestimmte Schwellenwertdistanz (610);
Bestimmen eines Anflugkurses zu der Start-/Landebahn (612);
Erzeugen eines geländeverfolgenden Mittelliniensymbols der verlängerten Start-/Landebahn entlang dem Anflugkurs (614); und
Anzeigen des Mittelliniensymbols der verlängerten Start-/Landebahn auf einem Bildschirm, wenn die berechnete Distanz kürzer ist als die im Voraus bestimmte Schwellenwertdistanz, wobei das Mittelliniensymbol der verlängerten Start-/Landebahn einen visuellen Hinweis auf Geländehöhen entlang dem Anflugkurs zu der Start-/Landebahn bereitstellt.

2. Verfahren nach Anspruch 1, wobei Erzeugen des geländeverfolgenden Mittelliniensymbols der verlängerten Start-/Landebahn enthält, Seitenlinienkoordinaten entlang dem Anflugkurs zu berechnen und mit den Koordinaten korrespondierende Geländehöhendaten abzurufen.

3. Verfahren nach Anspruch 1, ferner enthaltend, ein Luftfahrzeugsymbol (616) zu erzeugen.

4. Verfahren nach Anspruch 3, ferner enthaltend, das Luftfahrzeugsymbol auf dem Bildschirm anzuzeigen, um Informationen über die Position des Luftfahrzeugs bereitzustellen.

5. Verfahren nach Anspruch 4, wobei das Luftfahrzeugsymbol ferner eine Bewegungsrichtung bereitstellt.

6. Verfahren nach Anspruch 3, ferner enthaltend, mindestens zwei Seitenabweichungsmarken (618) zu erzeugen.

7. Verfahren nach Anspruch 6, wobei Erzeugen der Seitenabweichungsmarken enthält, geländeverfolgende Projektionslinien bei einer Anzahl fester Winkel, die einem Ausstrahlungsstrahlmuster von einer Start-/Landebahn-Bake entsprechen, zu berechnen.

8. Verfahren nach Anspruch 6, ferner enthaltend, die Seitenabweichungsmarken auf dem Bildschirm so anzuzeigen, dass die Seitenabweichungsmarken um das Mittelliniensymbol der verlängerten Start-/Landebahn zentriert sind.

9. Verfahren nach Anspruch 6, ferner enthaltend, die Seitenabweichungsmarken so auf dem Bildschirm anzuzeigen, dass die Seitenabweichungsmarken um das Luftfahrzeugsymbol zentriert sind.

10. Verfahren nach Anspruch 1, wobei das Mittelliniensymbol der verlängerten Start-/Landebahn auf dem Bildschirm angezeigt wird, wenn eine Start-/Landebahn ausgewählt wurde und die Distanz eines Luftfahrzeugs zur Start-/Landebahn weniger als ein Schwellenwert beträgt.

## Revendications

1. Procédé pour fournir une symbologie d'affichage d'écart latéral conforme augmentée par le terrain pour un aéronef, le procédé comprenant les étapes combinées consistant à :
calculer une distance à une piste (608) ;
déterminer si la distance calculée est inférieure à un seuil de distance prédéfini (610) ;
déterminer une trajectoire d'approche vers la piste (612) ;
générer un symbole de prolongement d'axe de piste traçant le terrain le long de la trajectoire d'approche (614) ; et
afficher le symbole de prolongement d'axe de piste sur un écran si la distance calculée est inférieure au seuil de distance prédéfini, le symbole de prolongement d'axe de piste fournissant un repère visuel d'élévations de terrain le long de la trajectoire d'approche vers la piste.

2. Procédé selon la revendication 1, dans lequel l'étape consistant à générer le symbole de prolongement d'axe de piste traçant le terrain comporte l'étape consistant à calculer des coordonnées de lignes latérales le long de la trajectoire d'approche et récupérer des données d'élévations de terrain correspondant aux coordonnées.

3. Procédé selon la revendication 1, comportant en outre l'étape consistant à générer un symbole d'aéronef (616).

4. Procédé selon la revendication 3, comportant en outre l'étape consistant à afficher le symbole d'aéronef sur l'écran pour fournir des informations sur la position de l'aéronef.

5. Procédé selon la revendication 4, dans lequel le symbole d'aéronef fournit en outre une direction de parcours.

6. Procédé selon la revendication 3, comportant en outre l'étape consistant à générer au moins deux marqueurs d'écart latéral (618).

7. Procédé selon la revendication 6, dans lequel l'étape consistant à générer des marqueurs d'écart latéral comporte l'étape consistant à calculer des lignes de projection traçant le terrain pour un certain nombre d'angles fixes coïncidant avec un diagramme de faisceau d'émission produit par une balise de piste.

8. Procédé selon la revendication 6, comportant en outre l'étape consistant à afficher les marqueurs d'écart latéral sur l'écran de façon à ce que les marqueurs d'écart latéral soient centrés autour du symbole de prolongement d'axe de piste.

9. Procédé selon la revendication 6, comportant en outre l'étape consistant à afficher les marqueurs d'écart latéral sur l'écran de façon à ce que les marqueurs d'écart latéral soient centrés autour du symbole d'aéronef.

10. Procédé selon la revendication 1, dans lequel le symbole de prolongement d'axe de piste est affiché sur l'écran si une piste est sélectionnée et une distance d'un aéronef à la piste est inférieure à une valeur de seuil.
